Europäisches Patentamt

European Patent Office

Office européen des brevets

(19)

(11) Veröffentlichungsnummer: **0 225 506 B1**

(12) # EUROPÄISCHE PATENTSCHRIFT

(45) Veröffentlichungstag der Patentschrift: **21.10.92**

(21) Anmeldenummer: **86115761.8**

(22) Anmeldetag: **13.11.86**

Teilanmeldung 89119200.7 eingereicht am 13/11/86.

(51) Int. Cl.⁵: **B01D 17/02**, C02F 1/40

(54) **Leichtflüssigkeitsabscheider.**

(30) Priorität: **13.12.85 DE 8535037 U**

(43) Veröffentlichungstag der Anmeldung:
**16.06.87 Patentblatt 87/25**

(45) Bekanntmachung des Hinweises auf die Patenterteilung:
**21.10.92 Patentblatt 92/43**

(84) Benannte Vertragsstaaten:
**AT CH FR IT LI NL**

(56) Entgegenhaltungen:
EP-A- 0 069 885     AT-B- 347 870
BE-A- 342 447       DE-A- 1 517 923
DE-A- 3 403 718     FR-A- 2 322 833
FR-A- 2 351 683

(73) Patentinhaber: **PASSAVANT-WERKE AG**

**W-6209 Aarbergen 7(DE)**

(72) Erfinder: **Weiler, Walter, Dipl.-Ing.**
**Wilhelmstrasse 59**
**W-6252 Diez(DE)**
Erfinder: **Middelhaufe, Axel, Dipl.-Ing.**
**Panoramaweg 10**
**W-6252 Diez(DE)**
Erfinder: **Sehr, Gerhard**
**Hauptstrasse 44**
**W-5429 Allendorf(DE)**

## Beschreibung

Die Erfindung betrifft einen Leichtflüssigkeitsabscheider üblicher Bauart, d.h. nach dem Schwerkraftprinzip arbeitend mit einer im wesentlichen horizontal zu dem gegenüberliegenden, in Bodennähe angeordneten Reinwasserablauf durchströmten Beruhigungskammer. Bei derartigen Abscheidern ist die Aufenthaltszeit bzw. die Durchströmgeschwindigkeit für den Abscheidegrad maßgebend, weil Öltröpfchen unterhalb einer gewissen Größe während der Aufenthaltszeit nicht zur Wasseroberfläche der Beruhigungskammer aufsteigen können. Ursache für diese schwache Wirkung sind Verwirbelungen und Totzonen. Zur Verbesserung des Abscheidegrades wurde bei einem in der Draufsicht kreisförmigen Abscheider vorgeschlagen (FR-A 2 351 683) in der Mitte eine quer eingesetzte querschnittsfüllende Barriere aus faserförmigem Material vorzusehen, die auch als Strömungsgleichrichter wirken soll.

Dieser Strömungsgleichrichter ist auf der Anströmseite noch nicht optimal. Es wurde bei einem anderen Abscheider vorgeschlagen (DE-OS 34 03 718), dem oberen Zulauf in die Beruhigungskammer einen Strömungsgleichrichter unmittelbar nachzuordnen. Dieser Gleichrichter vernichtet den Impuls des Zulaufstroms und spreizt diesen im wesentlichen über den ganzen Strömungsquerschnitt auf. Dieser Strömungsgleichrichter ersetzt somit praktisch die den Zulaufstrom bei den herkömmlichen Bauformen nach unten umlenkende Einlaufarmatur. Durch die frühe Spreizung des Zulaufstroms werden Abscheidegrade erreicht, die noch weit über den von der DIN 1999 vorgegebenen Werten liegen.

Bei diesen bekannten Abscheidern mit einlaufseitigem Strömungsgleichrichter ist im oberen Bereich des Gleichrichters ein schmales Trennblech vorgesehen, das einerseits den Zulaufstrom von der bereits abgeschiedenen Leichtflüssigkeitsschicht fernhält und andererseits ein Zurückfließen dieser Schicht in den Zulauf verhindern soll.

Die Aufgabe, bei Abscheidern mit der nach DIN 1999 vorgeschriebenen Einlauftauchwand gleich gute Abscheidegrade zu erzielen, wird gemäß der Erfindung dadurch gelöst, daß der Strömungsgleichrichter sich unmittelbar an die Tauchwand anschließt. Erstaunlicherweise werden die Abscheideergebnisse nicht schlechter, obwohl der durch die Tauchwand verringerte nutzbare Querschnitt der Beruhigungskammer schlechtere Ergebnisse erwarten ließ. Offenbar wird aber der Zulaufstrom hinter dem Strömungsgleichrichter ausreichend nach oben gespreizt, so daß der Kammerquerschnitt doch voll genutzt werden kann. Außerdem wurde beobachtet, daß die Gitterstruktur, wenn sie eine gewisse räumliche Mindestdicke hat, auch koaleszierend auf die angeschwemmten Mikrotropfen wirkt.

Die Gitterstruktur besteht vorteilhafterweise aus einem aus einer Matte aus offenporigem Schaumstoff ausgeschnittenen Formstück, das eine gewisse Eigensteife besitzt. Die Herausnehmbarkeit zwecks Reinigung oder Austausch wird erleichtert, wenn das ggf. aus mehreren aufeinandergelegten Zuschnitten bestehende Formstück von einem Drahtgitter gehalten oder eingefaßt wird, das oben einen Griff aufweist. Eine Halterung des Formstücks in der Kammer ist nicht erforderlich, wenn man dem Formstück gegenüber den lichten Maß des Kammerquerschnitts ein Übermaß von 10 bis 20 mm gibt; durch drehendes Einsetzen verklemmt sich das Formstück dann mit seinen Schmalseiten in der Kammer und kann auch durch den Zulaufstrom nicht gelöst werden. Es kann vorteilhaft sein, an den Innenwänden der Beruhigungskammer an diametral sich gegenüber liegenden Vertikalkanten des Formstücks Anschlagleisten vorzusehen, gegen die sich das Formstück beim drehenden Einsetzen anlegt und dadurch in der Endlage fixiert wird.

Die Halterung der Formstücke am Drahtgitter kann durch Dorne erfolgen, auf die die Zuschnitte aufgesteckt werden. Es ist auch denkbar, das Drahtgitter als die Zuschnitte von oben übergreifende offene Tasche auszubilden, zwischen deren beiden Wänden die Zuschnitte eingeklemmt werden.

Bei Abscheidern, die einen sich nach unten erweiternden Querschnitt haben, ober bei denen der aufgesetzte Kontroll- und Wartungsschacht eine kleinere lichte Weite hat als der Abscheider, ist es zweckmäßig, die Formstücke in mehrere Abschnitte zu unterteilen. Vorzugsweise sind drei Teile vorgesehen, wobei das mittlere Teil, das zuletzt eingesetzt wird, eine nach oben herausnehmbare Keilform hat.

Die Erfindung wird anhand des in der Zeichnung dargestellten Ausführungsbeispiels nachfolgend noch näher erläutert. Es zeigen:

Fig. 1     einen gußeisernen Leichtflüssigkeitsabscheider mit dem eingesetzten Strömungsgleichrichter im vertikalen Längsschnitt,

Fig. 2     einen vertikalen Querschnitt durch den Abscheider nach Fig. 1 mit nach oben sich verringernder lichter Weite und dreigeteilter Gitterstruktur.

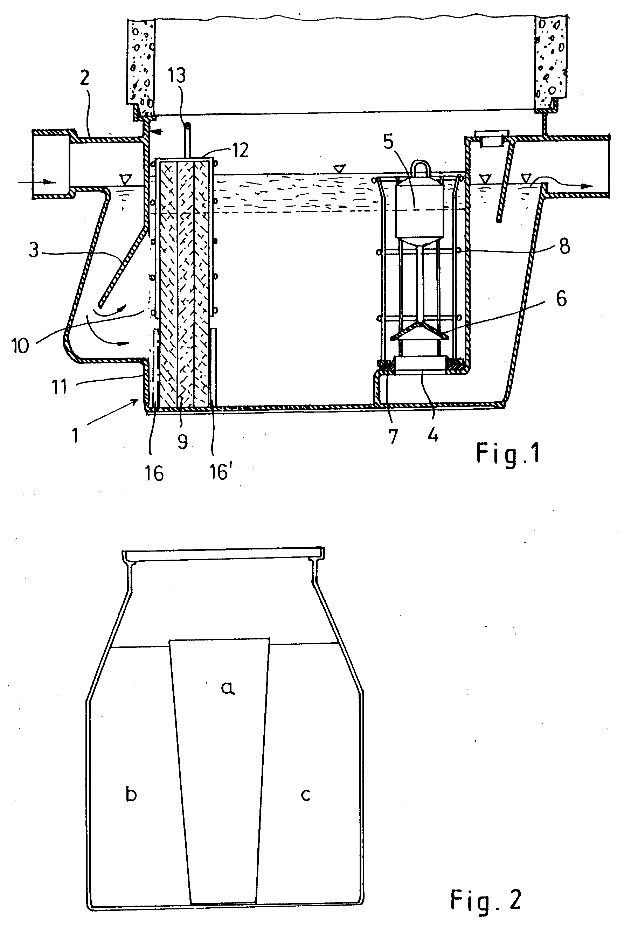

Der Abscheider 1 nach Fig. 1 besitzt eine dem Zulaufstutzen 2 nachgeordnete, den nach DIN 1999 vorgeschriebenen Geruchverschluß bildende Tauchwand 3, die im unteren Teil nach rückwärts abgeknickt ist. Dem Zulauf gegenüber liegt in Bodennähe die Auslauföffnung 4, die durch ein durch einen Schwimmer 5 gesteuertes Verschlußventil 6 kontrolliert ist. Der Schwimmer 5 ist von einem auf den Ventilsitz 7 aufgesetzten Käfig 8 geführt.

Der Strömungsgleichrichter 9 schließt sich unmittelbar an die Tauchwand 3 an. Das den Strömungsgleichrichter bildende Formstück ist aus drei, aus einer offenporigen Schaumstoffmatte hergestellten Zuschnitten zusammengesetzt, die durch ein Stahl- oder Kunststoffdrahtgestell 12 mit Griff 13 zusammengehalten werden. Um das Formstück in Einbaulage zuverlässig zu fixieren, sind an den Abscheiderwänden zwei sich diametral gegenüberliegende Anschlagleisten 16, 16' vorgesehen.

Fig. 2 veranschaulicht, wie ein mehrteiliges Formstück a, b, c für einen sich nach oben verengenden Abscheider aussehen kann. Nicht dargestellt sind hier die Haltegitter, die für diesen Sonderfall mit zusammenpassenden Knöpf- oder Schiebeelementen versehen sein müssen.

## Patentansprüche

1. Leichtflüssigkeitsabscheider mit einer im wesentlichen horizontal durchströmten Beruhigungskammer, einer dem oberen Zulauf (2) nachgeordneten, den Zulaufstrom nach unten umlenkenden Tauchwand (3), einem gegenüberliegenden, in Bodennähe angeordneten Reinwasserablauf (4) sowie einem eine Netzoder Gitterstruktur aufweisenden, den Kammerquerschnitt ausfüllenden Strömungsgleichrichter (9) **dadurch gekennzeichnet,** daß der Strömungsgleichrichter (9) sich unmittelbar an die Tauchwand (3) anschließt.

2. Leichtflüssigkeitsabscheider nach Anspruch 1, **dadurch gekennzeichnet.** daß der Strömungsgleichrichter (9) ein aus einer Matte ausgeschnittenes, in wesentlichen eigensteifes Formstück ist, das gegenüber dem lichten Maß des Kammerquerschnitts ein Übermaß von 10 - 20 mm hat.

3. Leichtflüssigkeitsabscheider nach Anspruch 2, **dadurch gekennzeichnet,** daß an den Innenwänden der Beruhigungskammer an diametral sich gegenüberliegenden Vertikalkanten Anschlagleisten (16, 16') als Endlagenfixierung beim drehenden Einsetzen des Formstücks vorgesehen sind.

4. Leichtflüssigkeitsabscheider nach Anspruch 2 oder 3, **dadurch gekennzeichnet,** daß das Formstück aus mehreren Teilen (a, b, c) zusammengesetzt ist, wobei jedes Teil nur so groß ist, daß es durch die Öffnung des Abscheiders oder des Kontrollschachts paßt.

5. Leichtflüssigkeitsabscheider nach Anspruch 4, **dadurch gekennzeichnet,** daß das Formstück aus drei Teilen (a, b,c) besteht, wobei das mittlere (a) eine nach oben herausnehmbare Keilform hat.

## Claims

1. Separator for low viscosity liquids including a quieting chamber with a mainly horizontal current, a baffle located behind the inlet and diverting the inflow downward, a clear water outlet located on the opposite side close to the bottom as well as a flow straightener with a grid structure filling the cross-section of the basin, **characterized in that** the flow straightener (9) is placed right behind the baffle (3).

2. Separator for low viscosity liquids according to claim 1, **characterized in that** the flow straightener (9, 9') consists mainly of an inherently rigid shaped part which has been cut out of a mat and which is oversized by 10 to 20 mm with respect to the inside dimensions of the basin cross-section.

3. Separator for low viscosity liquids according to claim 2, **characterized in that** the vertical edges of the quieting chamber inside walls being diametrically opposite are provided with locating stops (16, 16') serving as final position limit during insertion of the shaped part which is lightly twisted for this purpose.

4. Separator for low viscosity liquids according to claim 2 or 3, **characterized in that** the shaped part is composed of several parts (a, b, c), each part being only so big to fit through the opening of the separator or the control pit.

5. Separator for low viscosity liquids according to claim 4, **characterized in that** the shaped part consists of three parts (a, b, c) of which the center part (a) is cone-shaped and removable from above.

## Revendications

1. Séparateur pour hydrocarbures légers constitué par une chambre d'amortissement, principalement avec un courant d'eau horizontal, par une paroi plongeuse située derrière l'entrée supérieure et dirigeant le courant d'amenée vers le bas, par une sortie d'eau clarifiée située en face à proximité du fond du bassin ainsi que par un redresseur de courant d'eau avec une structure réticulaire remplissant la section transversale du bassin **caractérisé en ce que** le redresseur de courant d'eau (9) est situé directement derrière la paroi plongeuse (3).

2. Séparateur pour hydrocarbures légers selon revendication 1, **caractérisé en ce que** le redresseur de courant d'eau (9, 9') est une pièce formée, essentiellement indéformable, étant coupée d'une natte, qui est surdimensionnée de 10 à 20 mm à l'égard des dimensions intérieures de la section transversale du bassin.

3. Séparateur pour hydrocarbures légers selon revendication 2, **caractérisé en ce que** les arêtes verticales des parois intérieures de la chambre d'amortissement étant diamétralement opposées sont pourvues des butées (16, 16') servant de limite de position finale lors du placement de la pièce formée, laquelle est tordue légèrement à cet effet.

4. Séparateur pour hydrocarbures légers selon revendication 2 ou 3, **caractérisé en ce que** la pièce formée est composée de plusieures parties (a, b, c) dont une partie est seulement si grande qu'elle va dans l'ouverture du séparateur ou du puits de contrôle.

5. Séparateur pour hydrocarbures légers selon revendication 4, **caractérisé en ce que** la pièce formée est composée de trois parties (a, b, c) dont la partie centrale (a) en forme de cône peut être retirée par la haut.

Fig.1

Fig. 2